# EUROPEAN PATENT SPECIFICATION

(11) **EP 2 292 680 B1**
(45) Date of publication and mention of the grant of the patent: **21.10.2015**
(21) Application number: 09169554.4
(22) Date of filing: 04.09.2009
(51) Int. Cl.: C08J 3/20, C08J 7/12, D06P 3/24, D06P 3/79

(54) **Deep Dyeing Process of Polyamide and Polyolefin**
tiefenfärbungsverfahren von polyamid und polyolefin
processus de teinture profonde et polyamide et polyoléfine

(43) Date of publication of application: 09.03.2011
(73) Proprietor: Yeh, Jen-Taut, Taipei 106 (TW); Hong Jen Textile Co. Ltd., Taipei City 103 (TW)
(72) Inventor: Yeh, Jen-Taut, 106, Taipei (TW); Chen, Kan-Nan, 103, Taipei (TW); Tsou, Chi-Hui, 220, Taipei County (TW); Tang, Jing-Wen, 30011, Hsinchu (TW)
(74) Representative: Lang, Christian

(56) References cited:
- DE-A1- 4 030 358
- US-A1- 2007 107 145
- DATABASE WPI Week 200963 Thomson Scientific, London, GB; AN 2009-G77509 XP002564526 -& TW 200 835 740 A (UNIV FENG-CHIA) 1 September 2008 (2008-09-01)

## Description

### 1. FIELD OF THE INVENTION

The present invention relates to a deep dyeing process of a polyamide (PA or nylon including Nylon 4, Nylon , Nylon 46, Nylon 66, Nylon 7, Nylon 8, Nylon 9, Nylon 610, Nylon 1010, Nylon 11, Nylon 12, Nylon 13, Nylon 612, Nylon 9T, Nylon 13, MC Nylon, Nylon MXD6 and all polyamide derivatives) and a polyolefin (including ethylene copolymer, propylene copolymer, and related derivatives), and the deep dyeing process uses a compatibilizer precursor and an amino, hydroxyl or epoxy group containing chemical to modify the polyamide and polyolefin, and the modified polyamide and polyolefin has a low-temperature dyeability, and finally uses a reactive dye and/or an acid dye to perform the dyeing process, such that the dyed polyamide and polyolefin fibers have excellent dye fastness, light fastness, rubbing fastness and washing fastness.

### 2. DESCRIPTION OF RELATED ART

In general, polyamide (PA) or nylon is a linear condensation polymer composed of repeated primary bonds of amide groups (-CONH-), and featuring high crystallization, chemical resistance, oil resistance, solvent resistance, and abrasion resistance, a small coefficient of friction, a high level of thermal degradation, a broad manufacturing scope, and a self-lubrication. In addition, the mechanical properties of nylon has the advantages of high tensile strength, high impact resistance and excellent elasticity, tenacity and extensibility, and thus nylon can be used extensively as a composite material for the textile industry, an industrial fiber or an agent for enhancing fibers.

The structure of nylon is **characterized in that** an end of its molecular chain includes a functional group such as a carboxyl group (-COOH) and an amino group (-NH₂) having a good dyeability, and a large number of carbon-hydrogen bonds (-CH₂) and amide groups (-NHCO-) at the middle of the molecular chain, and thus various different types of dyes such as ionic dyes, acid mordant dyes, metal complex acid dyes, direct dyes, dispersive dyes, azo dyes, vat dyes, and acid dyes can be used for dyeing nylon fibers, and the dyeability of fibers depends on the dispersion of the dye and the affinity between the fibers and dye as well as their connection. In the aforementioned dyes, only the acid dye contains hydrophilic groups of sodium sulfonate radicals (-SO₃Na) that can be combined with the amino groups (-NH⁺) of the nylon fibers by the ionic bonds or electrostatic forces to provide better dyeability and brighter color, and the rest of the aforementioned dyes are combined with the nylon fibers by hydrogen bonds or Van der Waals forces to provide a lighter color. As to the uniform dyeability, the acid dye is the first choice for dyeing nylon fibers, and thus the acid dye is a popular application used most in related industries.

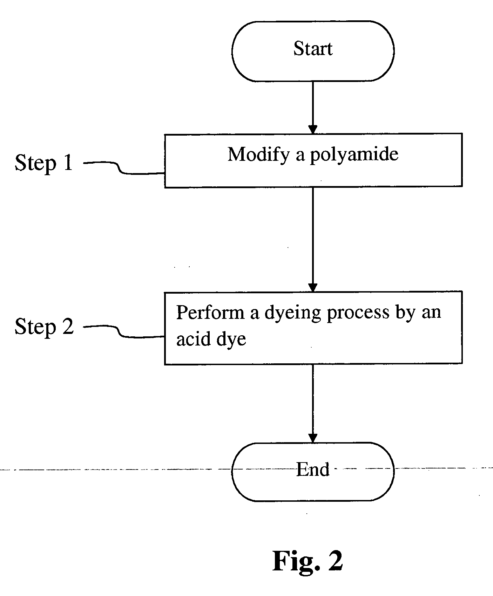

With reference to Fig. 2 for a conventional polyamide fiber dyeing process, the polyamide fibers are modified in a modification process and dyed with the acid dye, wherein the conventional modification process of the polyamide adds a chain regulator of different types and additive quantities to increase the content of amino groups (-NH₂) at the ends of a molecular chain of the nylon, while introducing a functional group with a special structure or adds a dye leveling agent or another co-agent in the dyeing process and performing a supersonic treatment, and finally a color fixation is performed after the dyeing process which has taken place in an oxidation-reduction system or water that is used as a ring opening agent to perform an open ring polymerization of the amide group (-NHCO-) to reduce the polymerization induction period and improve the reaction speed, such that when a new equilibrium is reached, the number of polymer molecules is increased, and the content of amino groups (-NH₂) will be increased accordingly, and the temperature before/after the hydrolysis and polymerization of the amide group (-NHCO-) will be increased appropriately, such that the content of amino groups (-NH₂) at the ends of the molecular chain can be increased to achieve the modification effect.

Since the content of amino groups (-NH₂) at the ends of the molecular chains of the nylon is very low (about 5~10% of wool only), therefore the aforementioned modification process still cannot achieve the effect of improving the content of amino groups (-NH₂) significantly. In other words, the dyeing effect of the nylon is relatively poor. Obviously, the conventional nylon fiber dyeing process has the following drawbacks:
1. The conventional process can achieve a mid-depth dyeing effect only. Since the acid dye and the polyamide are combined by the ionic bond or the electrostatic force, the bonding is relatively weak, and only a mid-depth dyeing effect can be obtained.
2. The conventional process generally results in poor dye fastness, light fastness, and washing fastness. The color of a dyed nylon processed by the conventional polyamide fiber dyeing process may be faded or stained easily by rinsing or exposures to sunlight or gas. The conventional dyed nylon has poor dye fastness, light fastness, and washing fastness.
3. The conventional process gives a non-level dyeing quality and incurs a high cost. In the conventional deep dyeing process of polyamide fibers, color difference, color deviations and stained spots may occur easily due to the dyeing condition and the selection of co-agents. In the meantime, the conventional deep dyeing process of the nylon fibers involves complicated dyeing processes and color fixation and incurs a high cost.
4. The conventional process requires a high dyeing temperature. The temperature for the conventional polyamide fiber dyeing process must be over 100∼120°C, and thus the process causes high costs and power consumptions.

Obviously, the conventional polyamide fiber dyeing process requires further improvements.

In addition, polyolefin (such as polyethylene and polypropylene) has the features of a light weight, a plentiful resource, a simple manufacturing process, a small specific gravity, and a low water absorption and the functions of chemical resistance, electrostatic resistance, and pollution resistance, and thus polyolefin is used extensively in many areas due to its functions and low production cost.

The non-polar structure of polyolefin is generally considered as a major hidden problem that polyolefin cannot be dyed, since the polyolefin fibers have a very low hydrophilic property, and thus the affinity between a dye and a chemical co-agent is poor, and conventional dyeing and printing methods are unable to achieve an expected dyeing effect. At present, an organic or inorganic dye is generally used for dyeing the polyolefin fibers and such method of coloring the polyolefin fibers incurs a low cost and achieves a better fastness. However, this method is suitable for a mass production of products in a single series of colors only, and unable to meet the requirements of the consumer market, and its drawbacks include an incapability of printing patterns and a high inventory, etc. As a result, polyolefin is primarily used for manufacturing a large quantity of carpets or a small quantity of clothes that require less color only. Therefore, it is an important subject for manufacturers to apply a general dyeing technique to the polyolefin fibers, and for scholars to do researches to improve the dyeing effect of polyolefin fibers, and some scientists have used a chlorination of sodium hypochlorite and a photo-chemical bromination to modify the polypropylene fibers in order to perform the dyeing with a cationic dye, and the modified polypropylene fibers and dye produce covalent forces to achieve the effects of enhancing the bleaching fastness, washing fastness, seawater fastness and moisture regain, while reducing the strength and requiring a post-treatment to improve the light fastness. Some manufacturers have also attempted using a series of polyurethane compounds and a radiating beam to polymerize the polypropylene compounds to produce a copolymer suitable for the dyeing process with a cation dye, an acid dye or a dispersive dye, and some manufacturers have added a polar additive to polypropylene to produce fibers that are dyed with an acid dye, and some manufacturers even have attempted using hydrogenated oligocyclopentadiene or wool to weave polypropylene fibers. With the aforementioned methods, manufacturers attempted to increase the dyeability of polypropylene, but also lowered the photo-sensitivity and mechanical properties of the polypropylene at the same time. Mostly important, the high cost of the modification makes polypropylene unfavorable to commercial applications. The dispersive dye and the hydrophobic fiber having a good compatibility among molecules in supercritical carbon dioxide are suitable for a dyeing process without requiring any co-agents. With the aforementioned perfect PET dyeing technology, the dispersion of the dispersive dye in the fibers and the solubility of the dispersive dye of a supercritical condition are studied. The dispersion and solubility of dyes can be determined by the properties of the dyes. In addition, the dispersive dye in supercritical CO₂ can be used for dyeing polyolefin fibers, and the dye can be a dispersive azo dye having a benzene ring structure, and thus its color is darker than a general dispersive dye. In addition to the high cost and the incapability for commercialization, the use of azo dyes is not recommended due to the issue of environmental protection and even prohibited in some developed countries (such as European Union).

In document TW 200 835 740 B a method is disclosed for a deep-dyeing of polypropylene, which achieves a water washing fastness of class 4 or more. The method includes modifying the polypropylene by mixing with a compatibilizer and a polymer with polar functional groups before melt spinning it. The document DE 40 30 358 A1 discloses a method for achieving a washing fastness of class 5 by functionalizing polyolefin surface with amine functionalities. The method consists of creating radicals via an electron beam on the polypropylene fibers, grafting and saponifying.

In summation of the description above, the conventional polyolefin fiber dyeing process still has the following shortcomings:
1. The conventional dyeing process only provides a mid-depth dyeing effect. Since the conventional modified polyolefin is dyed with a dispersive dye and the attraction force between physical bonds (such as hydrogen bonds or Van der Waal forces) has a weaker bonding, only a mid-depth dyeing effect can be obtained.
2. The conventional dyeing process has poor dye fastness, light fastness, and washing fastness. The polyolefin fibers dyed by the conventional dyeing process may be faded or stained easily under sunlight or exposure to special gases due to the poor dye fastness, light fastness, washing fastness and rubbing fastness.
3. The conventional dyeing process has a non-level dyeing quality and incurs high cost. A color difference, a color deviation and a stained spot may occur easily due to the dyeing conditions and the selection of co-agents. In the meantime, the conventional deep dyeing process of the nylon fibers involves complicated dyeing processes and color fixation and incurs high cost.
4. The conventional dyeing process requires a high dyeing temperature. The temperature for the conventional polyamide fiber dyeing process must be over 90~120°C, and thus it causes high cost and power consumption.
5. The conventional dyeing process is incompliant with the requirements of environmental protection. Azo dyes and metal-containing dyes are not recommended due to the issue of environmental protection, and they are even prohibited in some developed countries (such as European Union).

Therefore, the conventional polyolefin fiber dyeing process still has the foregoing shortcomings and requires immediate attention and feasible solutions.

### SUMMARY OF THE INVENTION

Therefore, it is a primary objective of the present invention to provide a deep dyeing process of polyamide and polyolefin, and the deep dyeing process uses a compatibilizer precursor and an amino, hydroxyl or epoxy group containing chemical to modify a polyamide (PA or nylon) including Nylon 4, Nylon 6, Nylon 46, Nylon 66, Nylon 7, Nylon 8, Nylon 9, Nylon 610, Nylon 1010, Nylon 11, Nylon 12, Nylon 13, Nylon 612, Nylon 9T, Nylon 13, MC Nylon, Nylon MXD6 and all polyamide derivatives and a polyolefin (including ethylene copolymer, propylene copolymer, and related derivatives) and then uses a reactive dye and/or an acid dye for a dying process, wherein the compatibilizer precursor is one selected from a carboxyl polymer, an anhydride polymer, a hydroxyl polymer, an epoxy polymer and a cyanate-based polymer, so as to overcome the shortcomings of the conventional nylon fiber dyeing process that is capable of providing a mid-depth dyeing effect only and resulting in poor dye fastness, light fastness, rubbing fastness, and washing fastness, and a non-level dyeing quality, a high dyeing temperature, and a high cost.

### BRIEF DESCRIPTION OF THE DRAWINGS

The invention, as well as its many advantages, may be further understood by the following detailed description and drawings in which:
Fig. 1 is a flow chart of the present invention;
Fig. 2 is a flow chart of a conventional dyeing process of polyamide fibers;
Fig. 3 shows test results of light absorptions of polyamides dyed at 100° C and with a reactive dye by a conventional polyamide fiber dyeing process and by a dyeing process in accordance with the present invention respectively and measured by an ultraviolet spectroscope; and
Fig. 4 shows test results of color strengths (K/S) of polyamides dyed at 100° C and with a reactive dye by a conventional polyamide fiber dyeing process and by a dyeing process in accordance with the present invention respectively and measured by a spectral colormeter.

### DETAILED DESCRIPTION OF THE INVENTION

To make it easier to understand the technical characteristics and operating procedure of the present invention, we use preferred embodiments together with the attached drawings for the detailed description of the invention as follows.

In a deep dyeing process of polyamide and polyolefin in accordance with the present invention, a compatibilizer precursor (such as a carboxyl polymer, an anhydride polymer, a hydroxyl polymer, an epoxy polymer and a cyanate-based compound) and an amino group (wherein the amino group containing chemical is one selected from the collection of ethylene diamine, diethylenetriamine, triethylenetetramine, tetra-ethylene pentamine, pentaethylenehexamine, hexaethyleneheptamine, polyethylene polyamine and their related derivatives), and a hydroxyl group or epoxy group containing chemical are used for modifying the polyamide (PA or nylon) and polyolefin (PO), and then a reactive dye and/or an acid dye are used for the dyeing process to provide the dyed polyamide and polyolefin with excellent dye fastness, light fastness, rubbing fastness, and washing fastness, so as to overcome the shortcomings of the conventional polyamide fiber dyeing process.

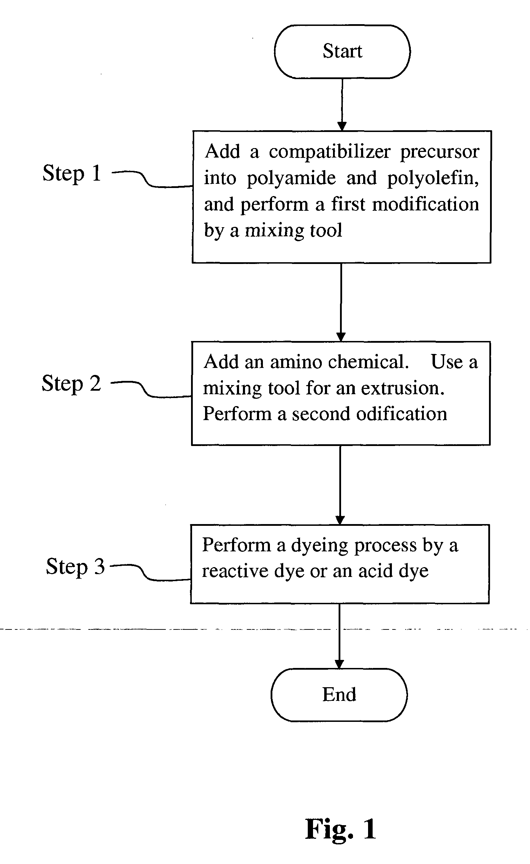

With reference to Fig. 1 illustrating a flow chart of the aforementioned deep dyeing process of the present invention, the deep dyeing process comprises the following steps:
Step 1 performs a first modification of polyamide and polyolefin. A compatibilizer precursor (CP, which is alkylcarboxy-substitute polyolefin used in the present invention) is added into the polyamide and polyolefin, and a mixing tool (such as a double screw extruder or mixer) is used for performing the first modification of polyamide and polyolefin at a predetermined temperature (which is 150∼250° C, and preferably 240° C) by a predetermined round-per-minute extrusion and mixing process (at 1 Hz to 200 Hz) to prepare a modified polyamide (MPA) and a modified polyolefin (MPO).
Step 2 performs a second modification of polyamide and polyolefin. An amino group containing chemicals (which is triethylenetetramine (TETA) used in the present invention) is added into the modified polyamide and the modified polyolefin, and then the mixing tool is used for performing a second modification of the polyamide and polyolefin at the predetermined temperature by the predetermined round-per-minute extrusion and mixing process. The modified polyamide and modified polyolefin are modified again, and their chemical formulae are given below: 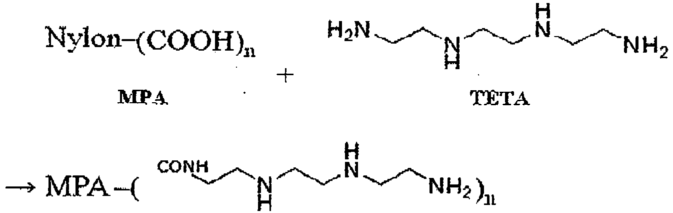 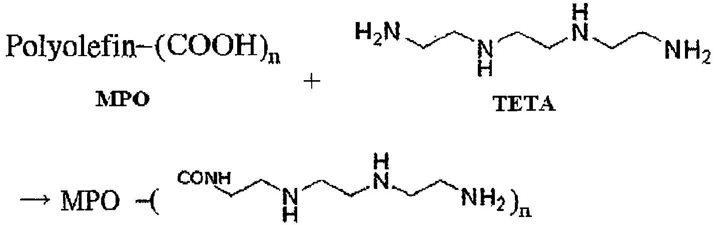
Step 3 uses a reactive dye for the dyeing process. After a melt spinning is performed for the second modified polyamide (MPA) and polyolefin (MPO) at a predetermined temperature (which is 235° C adopted in the present invention), a reactive dye (which is a Lanasol dye produced by Ciba Company and used in the present invention) is used for the dyeing process to complete the deep dyeing of the polyamide and polyolefin.

In the aforementioned deep dyeing process, the compatibilizer precursor (CP) and the amino, hydroxyl or epoxy group containing chemical (which is triethylenetetramine (TETA) used in the present invention) can be added into the polyamide and polyolefin at the same time, and the mixing tool is used for the modification at the predetermined temperature by a predetermined round-per-minute extrusion and mixing process (at 1 Hz to 200 Hz).

A melt spinning is performed for the modified polyamide (MPA) and modified polyolefin (MPO), and a reactive dye is used for the dyeing process to complete the deep dyeing of the polyamide and polyolefin.

The following test results show that the polyamide and polyolefin dyed by the deep dyeing process of the present invention have an excellent dyeing depth.

Table 1 shows the test results of a pollution fastness, a color fading fastness, and a washing fastness of modified polyamides (MPA) dyed by the conventional Nylon (PA) dyeing process and the dyeing process of the present invention taken at 60° C, 80° C and with a reactive dye respectively:

**Table 1: Six Types (W, A, T, N, C, Ac) of Pollution Fastnesses of Test Fabrics**

| Sample | | Polyamide (PA) | | | | Modified Polyamide (MPA) | | | |
|---|---|---|---|---|---|---|---|---|---|
| | | Red | Blue | Black | Yellow | Red | Blue | Black | Yellow |
| Pollution Fastness | W | 4 | 4 | 4 | 4 | 5 | 5 | 5 | 5 |
| | A | 5 | 5 | 5 | 5 | 5 | 5 | 5 | 5 |
| | T | 5 | 5 | 5 | 5 | 5 | 5 | 5 | 5 |
| | N | 4 | 4 | 4 | 4 | 5 | 5 | 5 | 5 |
| | C | 4 | 4 | 4 | 4 | 5 | 5 | 5 | 5 |
| | Ac | 5 | 5 | 5 | 5 | 5 | 5 | 5 | 5 |
| Color Fading Fastness | | Levels 4∼5 | Levels 4∼5 | Levels 4∼5 | Levels 4∼5 | Level 5 | Level 5 | Level 5 | Level 5 |

In Table 1, the test results show that the pollution fastnesses and color fading fastness of the conventional polyamide (PA) fall in Levels 4-5. On the other hand, the pollution fastnesses and color fading fastness of the modified polyamide (MPA) dyed by the dyeing process of the present invention fall at Level 5 (which is the highest level), and thus it shows that the deep dyeing process of the present invention can enhance the washing fastness of the polyamide fibers substantially.

Table 2 shows the test results of a light (xenon arc light) fastness of modified polyamides (MPA) dyed by the conventional polyamide (PA) dyeing process and the dyeing process of the present invention is taken at 80° C and with a reactive dye respectively:

**Table 2**

| Tetra-ethylene Pentamine (TEPA) Content (%) of Modified Polyamide (MPA) | | Polyamide (PA) | Modified Polyamide (MPA) |
|---|---|---|---|
| Level | Blue | 5-6 | 8 |
| | Red | 6 | 8 |
| | Black | 5-6 | 8 |
| | Yellow | 6 | 8 |

In Table 2, the test results show that the light (xenon arc light) fastness of the conventional polyamide (PA) fall in Levels 4-5. On the other hand, the light (xenon arc light) fastness of the modified polyamide (MPA) dyed by the dyeing process of the present invention fall at Level 8 (which is the highest level), and thus it shows that the deep dyeing process of the present invention can enhance the light fastness of the polyamide fibers substantially.

Table 3 shows the test results of a rubbing fastness of modified polyamides (MPA) dyed by the conventional polyamide (PA) dyeing process and the dyeing process of the present invention is taken at 60° C and 80° C and with a reactive dye respectively:

**Table 3**

| Sample | | Polyamide (PA) | | | | Modified Polyamide (MPA) | | | |
|---|---|---|---|---|---|---|---|---|---|
| | | Red | Blue | Black | Yellow | Red | Blue | Black | Yellow |
| Dry Rubbing Level | Pollution Fastness | 5 | 5 | 5 | 5 | 5 | 5 | 5 | 5 |
| | Color Fading Fastness | 5 | 5 | 5 | 5 | 5 | 5 | 5 | 5 |
| Wet Rubbing Level | Pollution Fastness | 4 | 4-5 | 4-5 | 4 | 5 | 5 | 5 | 5 |
| | Color Fading Fastness | Level 4 | Levels 4∼5 | Levels 4∼5 | Level 4 | Level 5 | Level 5 | Level 5 | Level 5 |

In Table 3, the test results show that the wet rubbing fastness of the conventional polyamide (PA) fall at level 4 or in Levels 4∼5. On the other hand, the rubbing fastness of the modified polyamide (MPA) dyed by the dyeing process of the present invention fall at Level 5 (which is the highest level), and thus it shows that the deep dyeing process of the present invention can enhance the rubbing fastness of the polyamide fibers substantially.

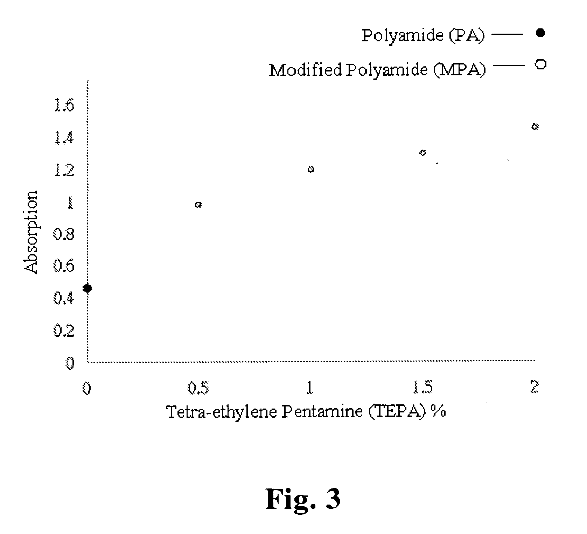

With reference to Fig. 3 for test results of light absorptions of polyamides dyed at 100° C and with a reactive dye by a conventional polyamide fiber dyeing process and by a dyeing process in accordance with the present invention respectively and measured by an ultraviolet spectroscope, the test results show that the light absorption of the polyamide (PA) dyed by the conventional dyeing process is only 0.47, and the light absorptions of the modified polyamides dyed by the dyeing process of the present invention with a tetra-ethylene pentamine (TEPA) content of 0.5%, 1%, 1.5% and 2% fall within a range of 0.9∼1.5, and thus it shows that the deep dyeing process of the present invention improves the dyeing quality substantially.

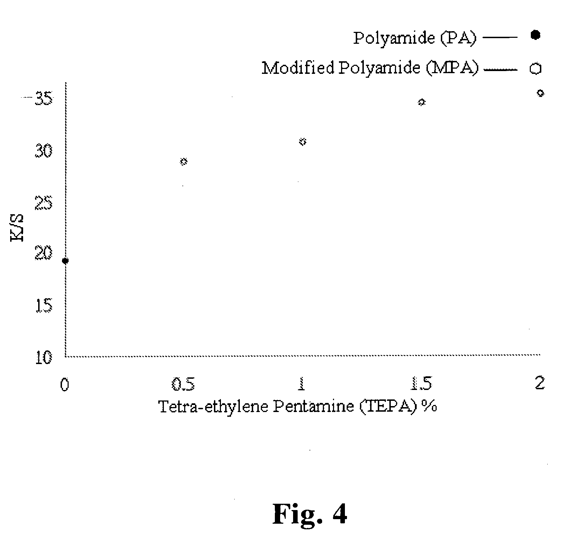

With reference to Fig. 4 for the test results of color strengths (K/S) of polyamides dyed at 100° C and with a reactive dye by a conventional polyamide fiber dyeing process and by a dyeing process in accordance with the present invention respectively and measured by a spectral colormeter, the test results show that the K/S value of the polyamide (PA) dyed by the conventional dyeing process is only 19, and the K/S values of the modified polyamide (MPA) dyed by the dyeing process of the present invention with a tetra-ethylene pentamine (TEPA) content of 0.5%, 1%, 1.5% and 2% fall within a range of 28.7~35.2, and thus it shows that the deep dyeing process of the present invention improves the dyeing depth of the nylon fibers substantially.

In summation of the description above, the main characteristics and differences of the present invention from the conventional nylon fiber dyeing process are listed below:
1. The present invention is novel and advantageous over the prior art. Since the conventional polyamide fiber dyeing process uses an acid dye for dying nylon fibers, and a bonding of an ionic bond and an electrostatic force is formed between the acid dye and the polyamide fiber, therefore the affinity is weaker. On the other hand, the present invention uses a reactive dye and/or an acid dye for the dyeing process, and thus provides a better and brighter color effect and a better recurrence, and a very strong bonding of covalent bonds is formed between the reactive dye and/or acid dye and the polyamide and polyolefin, so that the dyed polyamide and polyolefin have excellent dye fastness, light fastness, and washing fastness to overcome the weaker bonding affinity caused by the conventional nylon fiber dyeing process that can provide a mid-depth dyeing effect only, and poor dye fastness, light fastness, and washing fastness. Thus, the present invention is novel and advantageous over the prior art.
2. The present invention is practically useful. The conventional polyamide fiber dyeing process requires adding a dye leveling agent or another co-agent in the dyeing process to maintain the dyeing quality. On the other hand, the present invention uses two times of modification to increase the content of amino groups (-NH₂) at an end of a molecular chain of the polyamide for bonding the reactive dye and/or the acid dye to achieve a level dyeing effect. In the meantime, the invention can lower the cost significantly to overcome the shortcomings including the non-level dyeing quality and the high cost of the conventional polyamide fiber dyeing process. Thus, the present invention is practically useful.
3. The present invention has a low-temperature dyeability for achieving the purpose of energy saving and carbon reduction. The conventional nylon fiber dyeing process requires a high-temperature dyeing at a temperature over 100∼120°C, and incurs a high power consumption and much effort. On the other hand, the present invention can perform the dyeing process at 60°C, and thus the invention complies with the requirements for cost-effectiveness, low cost, and energy saving and carbon reduction policy promoted by the government. The invention can overcome the shortcoming of the conventional nylon dyeing process that requires a high temperature for the dyeing, and thus achieves the energy saving and carbon reduction effects.

## Claims

1. A deep dyeing process of polyamide or polyolefin, comprising the steps of:
adding a compatibilizer precursor to the polyamide or polyolefin, and using a mixing tool to perform a first modification at a predetermined temperature by a predetermined round-per-minute extrusion and mixing process;
adding an amino, hydroxyl or epoxy group containing chemicals to polyamide or polyolefin modified according to the first modification, and then using the mixing tool to perform a second modification at the predetermined temperature by the predetermined round-per-minute extrusion and mixing process; and
melt spinning the polyamide or polyolefin modified according to the second modification, and then using a reactive dye and/or an acid dye for performing the dyeing process to complete the deep dyed polyamide and polyolefin,
wherein the compatibilizer precursor is one selected from a carboxyl polymer, an anhydride polymer, a hydroxyl polymer, an epoxy polymer and a cyanate-based polymer.

2. The deep dyeing process of polyamide or polyolefin as recited in claim 1,
wherein the amino group containing chemical is one selected from ethylene diamine, diethylenetriamine, triethylenetetramine, tetra-ethylene pentamine, pentaethylenehexamine, hexaethyleneheptamine and polyethylene polyamine and their related derivatives.

3. The deep dyeing process of polyamide or polyolefin as recited in claim 1,
wherein the hydroxyl group or epoxy group containing chemical is one selected from the collection of an epoxy resin (EEW 128-280) and its related derivative.

4. The deep dyeing process of polyamide or polyolefin as recited in claim 1,
wherein the predetermined temperature is 150~250° C.

5. The deep dyeing process of polyamide or polyolefin as recited in claim 1,
wherein the first modification and the second modification are carried out at the same time.

## Patentansprüche

1. Tiefenfärbeverfahren für Polyamide oder Polyolefine, welches die Schritte umfasst:
Zugabe einer Vorstufe eines Verträglichkeitsvermittlers zu dem Polyamid oder Polyolefin, und Verwendung eines Mischwerkzeugs, um mittels eines Extrusions- und Mischverfahrens mit einer festgelegten Umdrehungszahl pro Minute bei einer festgelegten Temperatur eine erste Modifizierung durchzuführen,
Zugabe einer amino-, hydroxyl- oder epoxidgruppenhaltigen Chemikalie zu dem Polyamid oder Polyolefin, das gemäß der ersten Modifizierung verändert wurde, und anschließende Verwendung des Mischwerkzeugs, um mittels des Extrusions - und Mischverfahrens mit einer festgelegten Umdrehungszahl pro Minute bei einer festgelegten Temperatur eine zweite Modifizierung durchzuführen, und
Schmelzspinnen des Polyamids oder Polyolefins, das gemäß der zweiten Modifizierung verändert wurde, und anschließende Verwendung eines Reaktivfarbstoffs und / oder eines Säurefarbstoffs, um das Färbeverfahren durchzuführen, sodass das vollständig tiefengefärbte Polyamid oder Polyolefin erhalten wird,
wobei die Vorstufe des Verträglichkeitsvermittlers wahlweise ein Carboxylpolymer, ein Anhydridpolymer, ein Hydroxylpolymer, ein Epoxidpolymer oder ein cyanat-basiertes Polymer ist.

2. Tiefenfärbeverfahren für Polyamide oder Polyolefine nach Anspruch 1, bei welchem die aminogruppenhaltige Chemikalie wahlweise Ethylendiamin, Diethylentriamin, Triethylentetramin, Tetraethylenpentamin, Pentaethylenhexamin, Hexaethylenheptamin oder Polyethylenpolyamin oder eines der dazugehörigen Derivate ist.

3. Tiefenfärbeverfahren für Polyamide oder Polyolefine nach Anspruch 1, bei welchem die hydroxylgruppenhaltige Chemikalie aus einer Gruppe ausgewählt ist, die verschiedene Epoxidharze (EEW 128-280) und die dazugehörigen Derivate umfasst.

4. Tiefenfärbeverfahren für Polyamide oder Polyolefine nach Anspruch 1, bei welchem die festgelegte Temperatur zwischen 150 und 250 °C beträgt.

5. Tiefenfärbeverfahren für Polyamide oder Polyolefine nach Anspruch 1, bei welchem die erste Modifizierung und die zweite Modifizierung gleichzeitig durchgeführt werden.

## Revendications

1. Procédé de teinture à coeur de polyamide ou de polyoléfine, comprenant les étapes :
d'ajout d'un précurseur d'un agent de compatibilisation du polyamide ou de la polyoléfine, et la mise en oeuvre d'un outil de mélange pour réaliser une première modification à une température prédéterminée par une extrusion à une vitesse en tours par minute prédéterminée et le procédé de mélange ;
d'addition de produits chimiques contenant des groupements amine, hydroxyle ou époxyde au polyamide ou à la polyoléfine modifiée selon la première modification, et ensuite la mise en oeuvre de l'outil de mélange pour réaliser une seconde modification à la température prédéterminée par l'extrusion à la vitesse en tours par minute prédéterminée et le procédé de mélange ; et
le filage par fusion du polyamide ou de la polyoléfine modifiée selon la seconde modification, et ensuite la mise en oeuvre d'un colorant réactif et/ou d'un colorant acide pour réaliser le procédé de coloration jusqu'à la teinture complète à coeur du polyamide et de la polyoléfine, dans lequel le précurseur de l'agent de compatibilisation est un produit choisi à partir d'un polymère carboxyle, d'un polymère anhydride, d'un polymère hydroxyle, d'un polymère époxy et d'un polymère sur base cyanate.

2. Procédé de teinture à coeur de polyamide ou de polyoléfine selon la revendication 1, dans lequel le produit chimique contenant le groupement amine est un produit choisi à partir de l'éthylène diamine, de la diéthylènetriamine, de la triéthylènetétramine, de la tétraéthylènepentamine, de la pentaéthylènehéxamine, de l'héxaéthylèneheptamine et du polyéthylène polyamine et des dérivés qui y sont associés.

3. Procédé de teinture à coeur de polyamide ou de polyoléfine selon la revendication 1, dans lequel le produit chimique contenant le groupement hydroxyle ou le groupement époxy est un produit choisi à partir de la gamme des résines époxy (EEW 128-280) et des dérivés qui y sont associés.

4. Procédé de teinture à coeur de polyamide ou de polyoléfine selon la revendication 1, dans lequel la température prédéterminée est 150 à 250 °C.

5. Procédé de teinture à coeur de polyamide ou de polyoléfine selon la description de la revendication 1, dans lequel la première modification, et la deuxième modification sont réalisées au même moment.
